# FASCICULE DE BREVET EUROPEEN

(11) **EP 1 125 501 B1**
(45) Date de publication et mention de la délivrance du brevet: **21.05.2003**
(21) Numéro de dépôt: 01400126.7
(22) Date de dépôt: 17.01.2001
(51) Int. Cl.: A22B 5/20

(54) **Dispositif de guidage pour la découpe de carcasses d'animaux de boucheries, installation pour la découpe de carcasses comprenant un tel dispositif, et procédé de découpe de carcasses**
Vorrichtung zum Spalten von Schlachttierkörpern, Anlage zum Spalten von Schlachttierkörpern mit solcher Vorrichtung und Verfahren zum Spalten von Schlachttierkörpern
Guiding device for splitting carcasses, apparatus for splitting carcasses comprising such device and method for splitting carcasses

(30) Priorité: 18.02.2000 FR 0002045
(43) Date de publication de la demande: 22.08.2001
(73) Titulaire: DURAND INTERNATIONAL, 07210 Baix Chomerac (FR)
(72) Inventeur: Torrelli, Didier, 07500 Guilherand Granges (FR)
(74) Mandataire: Geismar, Thierry

(56) Documents cités:
- EP-A- 0 801 900
- DE-A- 3 247 588
- DE-B- 1 189 404
- FR-A- 2 535 944

## Description

L'invention est relative au domaine de l'abattage d'animaux de boucheries, et s'applique à la découpe des carcasses des animaux, qui peuvent être des porcins, des ovins ou des bovins.

L'invention concerne un dispositif de guidage apte à appuyer sur la face dorsale externe d'une carcasse d'un animal, lors de la découpe de celle-ci.

Elle concerne également une installation pour la découpe de carcasses suspendues d'animaux de boucherie comprenant un tel dispositif, ainsi qu'un procédé de découpe de carcasses d'animaux de boucherie dont l'une des étapes au moins est mise en oeuvre par ce dispositif.

La découpe des carcasses, généralement suspendues par les pattes arrière, est pratiquée le plus souvent de la manière suivante, bien connue :
- on introduit un organe de coupe par la face ventrale ouverte de la carcasse ;
- on applique contre une face dorsale interne de la carcasse un organe de guidage interne ;
- on applique contre une face dorsale externe de la carcasse un organe de guidage externe à l'encontre de l'organe de guidage interne ;
- on met en fonction l'organe de coupe ;
- puis on déplace l'ensemble selon un plan de coupe.

Pour découper la carcasse d'une manière propre et nette, tout en garantissant une cadence de découpe répondant aux exigences des distributeurs, il est nécessaire d'immobiliser la carcasse pendant toute la durée de la découpe, d'une part en l'empêchant de se balancer, et d'autre part en l'empêchant de pivoter autour de l'axe formé par sa colonne vertébrale.

Les organes de guidage visent précisément à immobiliser la carcasse pour maintenir l'organe de coupe dans une position centrale le long de la colonne vertébrale.

On connaît plusieurs types de dispositifs de guidage externe. Le document EP-801 900 décrit un dispositif de guidage avec galets fous embarqué sur le chassis de la tête de coupe. Le document FR 2 535 944 décrit un dispositif de guidage avec galets fous mobiles le long d'une colonne de guidage externe en vis-à-vis de la colonne de découpe. D'autres systèmes utilisent des galets montés sur un point fixe.

Tous ces dispositifs de l'art antérieur utilisent des moyens de guidage externe présentant des surfaces d'appui à symétrie de révolution d'axes perpendiculaires au plan de coupe. Typiquement dans le cas de galets, les axes de rotation d'une même paire de galets sont confondus et perpendiculaires au plan de coupe.

Dans d'autres documents, les axes de rotation des galets ne sont pas perpendiculaires au plan de coupe.

Dans le document DE 3 247 588, l'axe des galets est parallèle au plan de coupe, les galets de forme tronconique prenant appui sur les côtés de la carcasse.

Dans le document DE 1189 404, les axes de rotation des galets forment un ensemble en V et sont inclinés par rapport au plan de coupe.

La demanderesse a constaté que le balancement de la carcasse est limité par la combinaison de l'application de l'organe de guidage interne contre la face dorsale interne de la carcasse, et de l'application de l'organe de guidage externe contre la face dorsale externe de la carcasse à l'encontre de l'organe de guidage interne.

Cependant, la demanderesse a également constaté que les organes de guidage externe connus ne parviennent pas à enrayer le pivotement de la carcasse autour de sa colonne vertébrale.

En effet, on constate un glissement ou un dérapage non souhaité des galets sur la face dorsale de la carcasse, dû à la combinaison de facteurs tels que :
- les vibrations dues à l'effort de coupe ;
- la présence d'un liquide plus ou moins visqueux (généralement un mélange d'eau et de graisse) sur la face dorsale de la carcasse ;
- l'écartement des deux demi-carcasses en formation provoqué par le passage de l'organe de coupe.

De ce fait, les dispositifs de guidage connus ne permettent pas d'assurer un maintien optimal de la carcasse lors de sa découpe.

De plus ces dispositifs ne permettent pas toujours lorsque l'on utilise comme organe de coupe une lame de scie, de garantir une découpe optimale de toutes les apophyses, notamment lorsque les carcasses présentent des défauts de symétrie, critère de qualité exigé dans certains abattoirs.

L'invention vise à pallier notamment les inconvénients précité de l'art antérieur, en proposant un dispositif de guidage de la carcasse permettant d'assurer un maintien ferme de la carcasse sans glisser ni déraper sur celle-ci.

L'invention vise également à recentrer et maintenir les viandes et les apophyses avant le passage de la lame de scie pour permettre une excellente découpe.

A cet effet, un premier objet de l'invention est un dispositif de guidage apte à appuyer sur la face dorsale externe d'une carcasse d'un animal, lors de la découpe de celle-ci, tel que décrit dans la revendication 1.

De la sorte, le dispositif de guidage exerce sur la face dorsale externe de la carcasse une force de pincement qui permet d'assurer un maintien ferme de la carcasse lors de sa découpe, et permet ainsi d'améliorer la qualité de la découpe ainsi que son rendement.

Selon un mode de réalisation, chaque galet a la forme d'un tronc de cône de révolution dont l'axe est sensiblement confondu avec l'axe de rotation du galet, et dont la base est tournée vers le châssis.

En outre, chaque galet peut comprendre au moins une gorge ménagée dans la surface extérieure du galet, cette gorge présentant une symétrie de révolution autour de l'axe de rotation du galet.

Par exemple, chaque galet comprend une pluralité de gorges coaxiales espacées les unes des autres, ménagées dans la surface extérieure du galet, présentant chacune une symétrie de révolution autour de l'axe de rotation du galet.

Selon un mode de réalisation, l'angle formé par les axes de rotation des galets d'une même paire est compris entre 60° et 140°.

Les galets peuvent être réalisés dans un matériau polymère synthétique.

Le dispositif de guidage se présente sous la forme d'un palonnier étendu selon une direction dite principale, et comprend un moyeu fixé à demeure sur la face externe du châssis, et dont l'axe est sensiblement perpendiculaire à la dite direction principale.

Le châssis comprend par exemple une paire de branches étendues selon la dite direction principale, sur chacune desquelles est monté pivotant un galet.

Selon un mode de réalisation, le châssis comprend deux paires de branches disposées en croix, étendues sensiblement selon la dite direction principale, un galet étant monté pivotant sur chaque branche.

Un deuxième objet de l'invention est une installation pour la découpe de carcasses suspendues d'animaux de boucherie, comprenant :
- un organe de coupe apte à se déplacer suivant un plan dit de coupe, pour découper une carcasse au moins en partie ;
- un organe de guidage interne situé sous l'organe de coupe, apte à être appliqué contre une face dorsale interne de la carcasse qui comprend un dispositif de guidage tel que celui décrit ci-dessus; et
- un organe de guidage externe apte à être appliqué, à l'encontre de l'organe de guidage interne, contre une face dorsale externe de la carcasse.

Le dispositif de guidage est monté pivotant sur un bras mobile porté par une poutre qui porte également l'organe de coupe, ou sur un bras mobile indépendant de l'organe de coupe.

Le dispositif de guidage forme un palonnier monté pivotant sur le bras mobile au moyen d'un moyeu, le dit dispositif étant apte à pivoter par rapport à l'axe du moyeu.

En outre, le dispositif de guidage peut comprendre un organe de rappel élastique apte à asservir la position angulaire du dispositif de guidage par rapport au bras mobile.

Un troisième objet de l'invention est un procédé de découpe de carcasses d'animaux de boucherie, qui comprend les étapes prévoyant :
- d'introduire un organe de coupe par le côté ventral ouvert de la carcasse ;
- d'appliquer contre une face dorsale interne de la carcasse un organe de guidage interne ;
- d'appliquer contre une face dorsale externe de la carcasse un organe de guidage externe à l'encontre de l'organe de guidage interne ;
- de mettre en fonction l'organe de coupe ;
- de déplacer l'ensemble selon un plan de coupe ;
- de pincer la face dorsale externe de la carcasse pour assurer son maintien lors de sa découpe, en appliquant contre la face dorsale externe de la carcasse un dispositif de guidage tel que décrit ci-dessus, et en déplaçant celui-ci selon le dit plan de coupe.

D'autres objets et avantages de l'invention apparaîtront au cours de la description qui va suivre de modes de réalisation, description faite en référence aux dessins annexés, dans lesquels :
- la figure 1 est une vue d'élévation transversale d'une installation pour la découpe de carcasses suspendues d'animaux de boucherie illustrant la découpe d'une carcasse défilant entre un ensemble de découpe et un ensemble d'appui comprenant un dispositif de guidage appuyant sur la face dorsale externe de la carcasse et se déplaçant le long de la colonne vertébrale de la carcasse ; le dispositif de guidage est fixé à l'extrémité d'un bras transversal ;
- la figure 2 est une vue en perspective partiellement éclatée du dispositif de guidage de la figure 1 ;
- la figure 3 est une vue d'élévation longitudinale du dispositif de guidage de la figure 2 ;
- la figure 4 est une vue en coupe partielle du dispositif de guidage selon la ligne IV-IV de la figure 3 ;
- la figure 5 est une vue en coupe du dispositif de guidage selon la ligne V-V de la figure 3, fixé à l'extrémité du bras transversal illustré sur la figure 1, également représenté partiellement en coupe ;
- la figure 6 est une vue d'élévation longitudinale partielle de l'installation de la figure 1, illustrant une carcasse sur la face dorsale externe de laquelle se déplace un dispositif de guidage analogue à celui des figures 2 à 5 ;
- la figure 7 est une vue en coupe d'une carcasse sur laquelle est appuyé un dispositif de guidage, selon la ligne VII-VII de la figure 6 ;
- la figure 8 est une vue d'élévation transversale d'une installation pour la découpe de carcasse analogue à celle de la figure 1 à une échelle agrandie, illustrant la mise en position de l'organe de coupe, ainsi que des organes de guidage respectivement interne et externe, préalablement à la découpe d'une carcasse ; la partie de la carcasse destinée à être découpée est représentée en hachures ; cette figure illustre l'installation selon un mode de réalisation où l'organe de guidage externe est indépendant de l'organe de coupe et de l'organe de guidage interne ;
- la figure 9 est une vue d'élévation transversale de l'installation de la figure 8 illustrant la phase de découpe de la carcasse ; l'organe de guidage interne est en appui sur la face dorsale interne de la carcasse, tandis que l'organe de guidage externe est en appui sur la face dorsale externe de la carcasse ;et
- la figure 10 est une vue d'élévation transversale d'une installation pour la découpe de carcasses analogue à celle des figures 8 et 9, selon un mode de réalisation où l'organe de guidage externe est porté par une poutre qui porte également l'organe de coupe et l'organe de guidage interne.

On décrit à présent l'invention selon des modes de réalisation particuliers donnés à titre d'exemples non limitatifs.

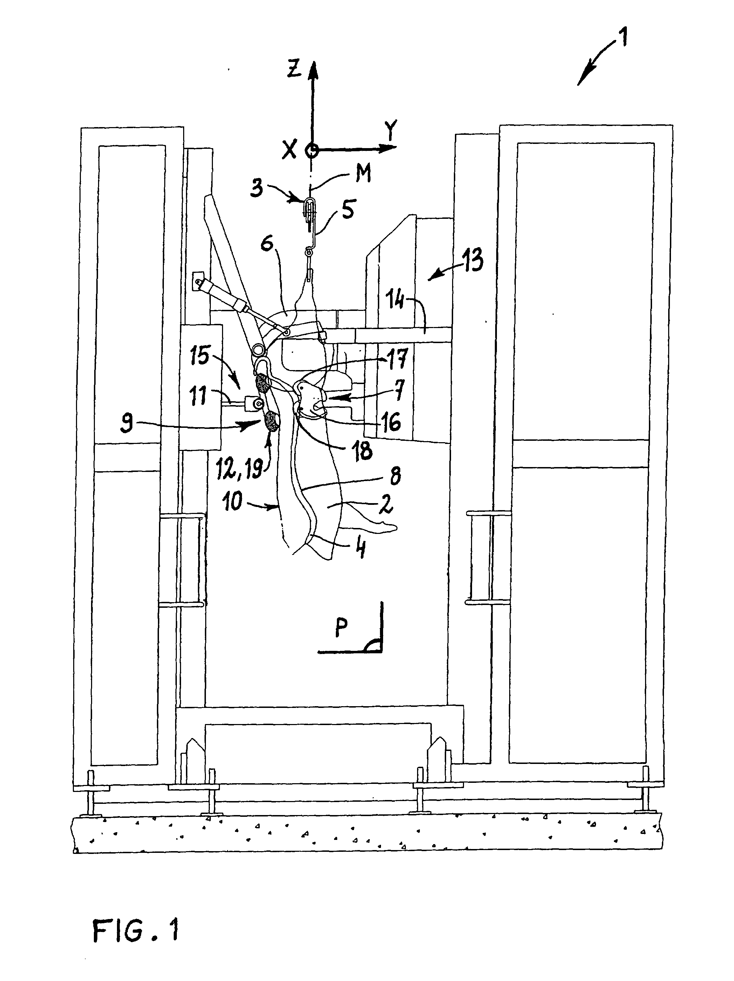

Sur la figure 1 est représentée une installation 1 pour la découpe par sciage de carcasses 2 d'animaux de boucherie suspendues par les pattes arrière à un transporteur 3 à défilement continu ou discontinu.

Le transporteur 3 achemine les carcasses 2 selon une direction X longitudinale, tandis que les carcasses 2 suspendues définissent une direction Z d'élévation perpendiculaire à la direction X longitudinale.

Les directions longitudinale X et d'élévation Z, représentées sur la figure 1, forment ensemble un plan dit médian M dans lequel sont déplacées les carcasses 2.

Une direction transversale Y, également représentée sur la figure 1, est perpendiculaire aux directions longitudinale X et d'élévation Z de sorte qu'ensemble ces trois directions X, Y, Z forment un repère orthogonal direct, par rapport auquel est effectuée la présente description.

Les termes « avant », « arrière » sont définis par rapport à la direction Y transversale, tandis que les termes « sur », « sous », « dessus », « dessous », « haut », « bas » sont définis par rapport à la direction Z d'élévation.

Dans la suite de la description, on considère une unique carcasse 2 destinée à subir au moins une opération de découpe par sciage selon un plan de coupe P d'élévation transversale, sensiblement confondu avec le plan de symétrie de la carcasse 2, dans lequel s'étend la colonne vertébrale 4 de cette dernière.

Le transporteur 3 peut être un convoyeur de forme et de construction appropriées, permettant de suspendre la carcasse 2 par l'intermédiaire d'une suspente 5 tel qu'un tinet à deux branches aux extrémités desquelles les pattes arrières de la carcasse 2 sont accrochées.

Pour réaliser la découpe de cette carcasse 2, l'installation 1 comprend :
- un organe de coupe 6 apte à se déplacer suivant le plan de coupe P, pour fendre la carcasse 2 au moins en partie ;
- un organe de guidage interne 7 situé sous l'organe de coupe 6, apte à être appliqué contre une face dorsale interne 8 de la carcasse 2 ; et
- un organe de guidage externe 9 apte à être appliqué, à l'encontre de l'organe de guidage interne 7, contre une face dorsale externe 10 de la carcasse 2.

La suspension de la carcasse 2 est telle qu'elle présente sa face ventrale et sa face dorsale interne 8 à l'organe de coupe 6 et à l'organe de guidage interne 7, tandis qu'elle présente sa face dorsale 10 à l'organe externe 9.

L'organe de guidage externe 9 comprend un bras mobile 11 à une extrémité libre duquel est monté pivotant un dispositif de guidage externe 12, tandis que l'organe de coupe 6 et l'organe de guidage interne 7 sont portés par un même ensemble dit de coupe 13.

L'ensemble de coupe 13 comprend une poutre 14 étendue transversalement et portant l'organe de coupe 6.

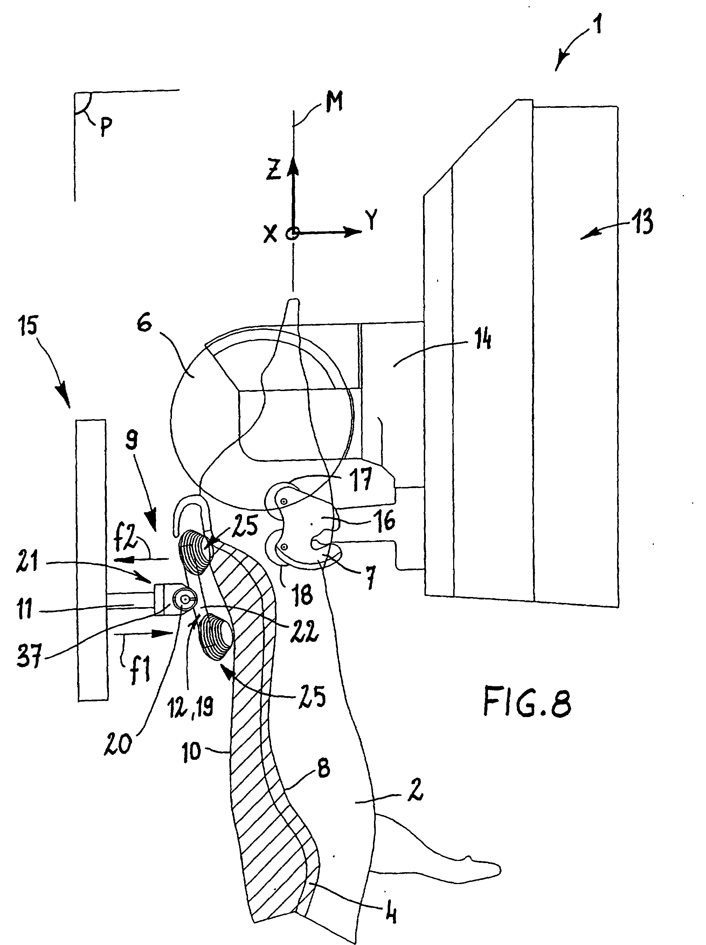

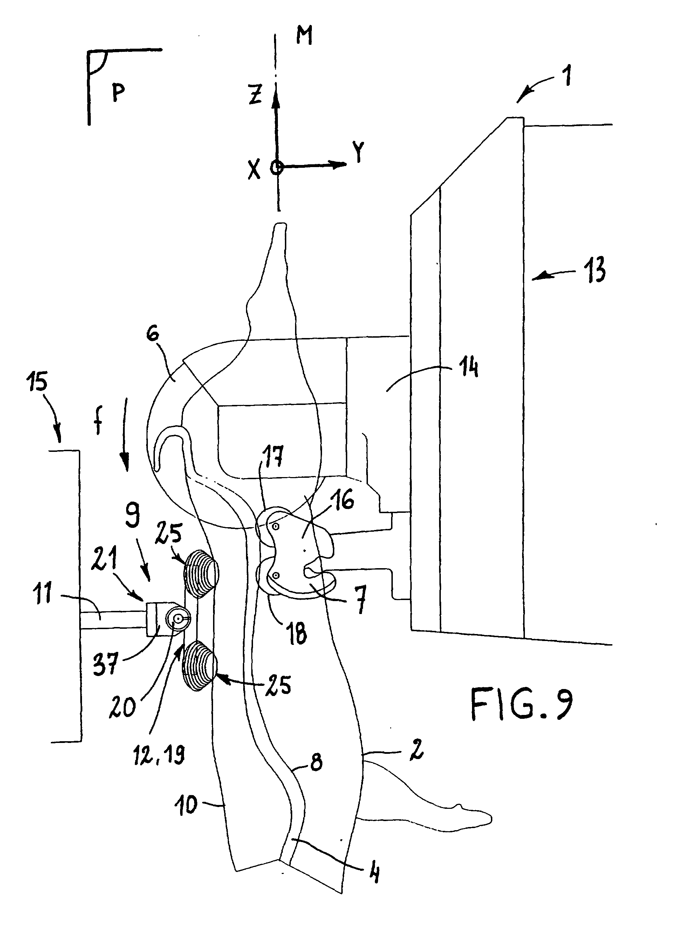

Selon un premier mode de réalisation illustré sur les figures 1, 8 et 9, l'organe de guidage externe 9 est porté par un ensemble dit de guidage externe 15 indépendant de l'ensemble de coupe 13.

Selon ce mode de réalisation, le bras mobile 11 est susceptible d'être animé, par un organe moteur non représenté tel qu'un vérin hydraulique, pneumatique ou analogue, d'un déplacement selon la flèche f1 telle qu'illustrée à la figure 1, pour que le dispositif de guidage externe 12 soit appuyé contre la face dorsale externe 10 de la carcasse 2, ou inversement selon la flèche f2 pour que le dispositif de guidage externe 12 libère cette face dorsale externe 10.

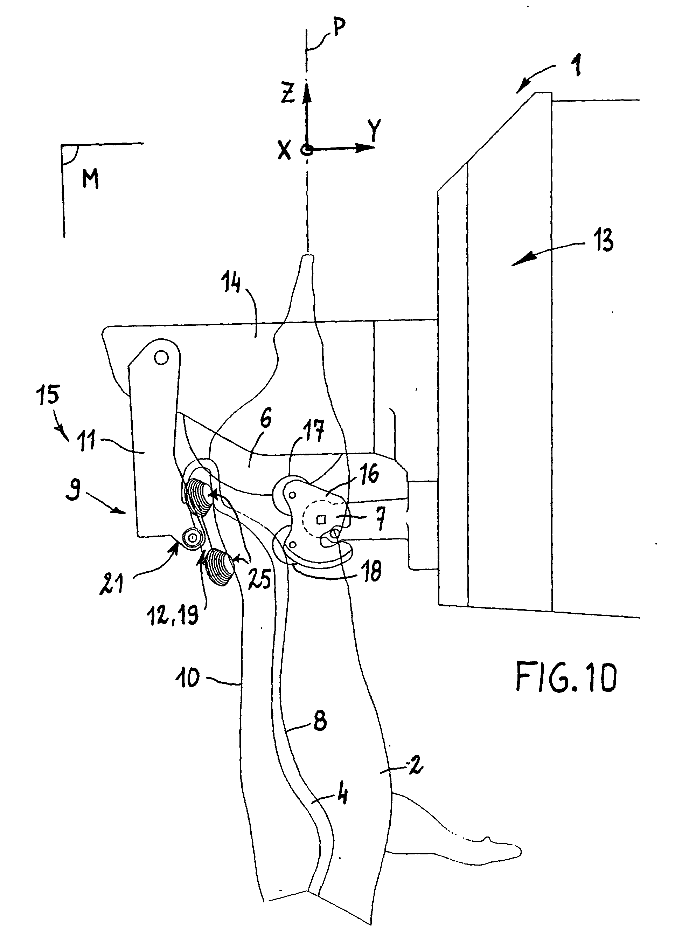

Selon un deuxième mode de réalisation, illustré sur la figure 10, l'organe de guidage externe 9 est porté par l'ensemble de coupe 13 ; par exemple la poutre 14 portant l'organe de coupe 6 porte également le bras 11 mobile, monté pivotant sur la poutre 14, dans un plan d'élévation transversale.

Selon ce mode de réalisation, le bras mobile 11 peut être animé d'un mouvement de rotation selon la flèche f3 représentée sur la figure 10.

L'organe de coupe 6 peut être une scie circulaire, tandis que l'organe de guidage interne 7 peut comprendre un palonnier 16 portant deux galets de guidage 17, 18 coopérant avec la face dorsale interne 8 de la carcasse 2 lors de la découpe de celle-ci (figures 1, 8, 9 et 10).

Le procédé de découpe de la carcasse 2 se déroule de la façon suivante :
- on introduit l'organe de coupe 6 entre les pattes arrière de la carcasse 2 ;
- on applique contre la face dorsale interne 8 de la carcasse 2 l'organe de guidage interne 7 ;
- on applique contre la face dorsale externe 10 l'organe de guidage externe 9 à l'encontre de l'organe de guidage interne 7 ;
- on mettre en fonction l'organe de coupe 6 ; lorsque celui-ci est une scie circulaire, on entraîne en rotation cette scie circulaire ;
- on déplace l'ensemble de coupe 13 et l'ensemble de guidage externe 15 selon le plan de coupe P, depuis le haut vers le bas.

Les organes de guidage interne 7 et externe 9 agissent, au fur et à mesure de leur progression le long de la colonne vertébrale 4 de la carcasse 2, de manière à faire coïncider le plan de coupe P et le plan de symétrie de la colonne vertébrale 4 pour obtenir une division de la carcasse 2 en deux demi-carcasses sensiblement égales.

La conformation de la face dorsale externe 10 de la carcasse 2 évolue le long de la colonne vertébrale 4. Cette évolution a une influence négative sur la qualité du guidage assuré par l'organe de guidage externe 9.

Par ailleurs, la découpe ayant lieu dans une atmosphère chargée de vapeur d'eau et de graisse, la face dorsale externe de la carcasse se révèle glissante, ce qui nuit également au positionnement de l'organe de guidage externe 9, et au maintien de la carcasse par ce dernier.

Afin de remédier à ces inconvénients, le procédé de découpe décrit ci-dessus prévoit en outre de pincer la face dorsale externe 10 de la carcasse 2 pour assurer un maintien ferme de la carcasse lors de sa découpe, en appliquant contre la face dorsale externe 10 de la carcasse 2 le dispositif de guidage externe 12 et en déplaçant celui-ci selon le plan de coupe P.

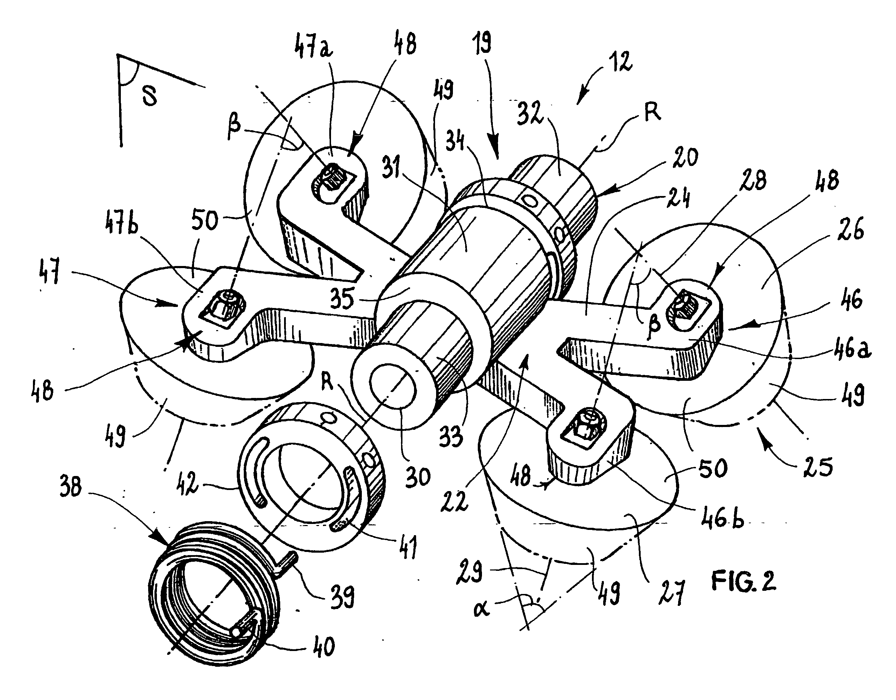

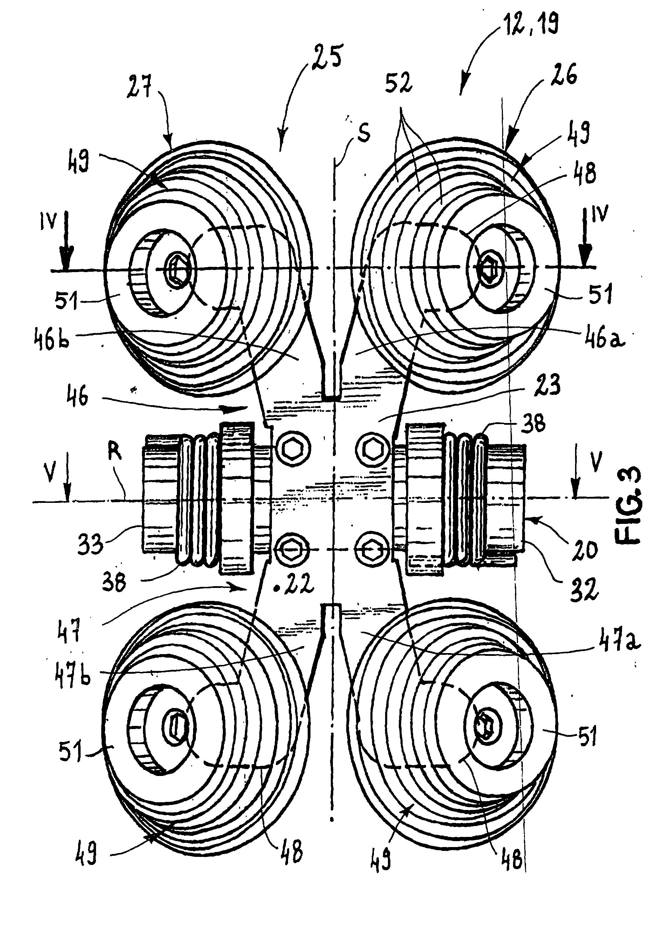

Ce dispositif 12, que l'on décrit à présent en détail en référence aux figures 2 à 7, est prévu pour assurer ce pincement lors de son déplacement le long du plan de coupe P.

Le dispositif de guidage 12 se présente sous la forme d'un palonnier 19, monté pivotant sur une partie extrême libre 21 du bras mobile 11 formant chape, au moyen d'un moyeu 20.

Ce palonnier 19 comprend :
- un châssis 22 qui comprend une face interne 23 destinée à être orientée vers la face dorsale externe 10 de la carcasse 2, ainsi qu'une face externe 24 opposée à la face interne 23 et par exemple sensiblement parallèle à celle-ci ; et
- au moins une paire 25 de galets 26, 27 fous montés sur le châssis 22 autour d'axes de rotation 28, 29.

Selon un mode de réalisation, le châssis 22 présente une symétrie par rapport à un plan noté S qui, lorsque le palonnier 19 est appliqué contre la face dorsale externe 10 de la carcasse 2, est sensiblement confondu avec le plan P de coupe.

Le moyeu 20 est fixé à demeure sur la face externe 24 du châssis 22.

Le palonnier 19 peut pivoter autour d'un axe de rotation R longitudinal, confondu avec l'axe du moyeu 20, et sensiblement perpendiculaire au plan S de symétrie du châssis 22.

Le moyeu 20 se présente, selon un mode de réalisation illustré sur les figures, sous la forme d'un cylindre percé d'un alésage 30 d'axe R.

Le moyeu comprend une partie médiane 31 ainsi que deux parties extrêmes 32, 33 dont le diamètre est inférieur à celui de la partie médiane 31, dont elles sont séparées par deux épaulements 34, 35.

Un arbre 36 est introduit dans l'alésage 30 et associé à ses deux extrémités à une chape 37 dont est pourvu la partie extrême libre 21 du bras mobile 11.

Ce montage permet au moyeu 20, et donc au palonnier, de pivoter autour de son axe R par rapport au bras mobile 11.

Afin d'asservir la position angulaire du palonnier 19 par rapport au bras mobile 11, il peut être prévu au moins un organe de rappel élastique 38 tel qu'un ressort de torsion, disposé entre le palonnier 19 et le bras mobile 11.

Par exemple, le dispositif de guidage externe 12 comprend deux ressorts hélicoïdaux 38 de traction emmanchés chacun sur une partie extrême 32, 33 du moyeu 20.

Chaque ressort 38 comprend par exemple deux saillies terminales 39, 40, dont l'une 39 est enfilée dans une fenêtre oblongue 41 ménagée dans une bague 42, 43 emmanchée sur la partie extrême 32, 33 du moyeu 20, contre l'épaulement 34, 35 correspondant.

L'autre saillie terminale 40 est quant à elle enfilée dans un trou 44 percé dans la chape 37 du bras 11.

La bague 42, 43 est maintenue fixe en rotation par exemple par l'intermédiaire d'une clavette, une goupille, ou analogue.

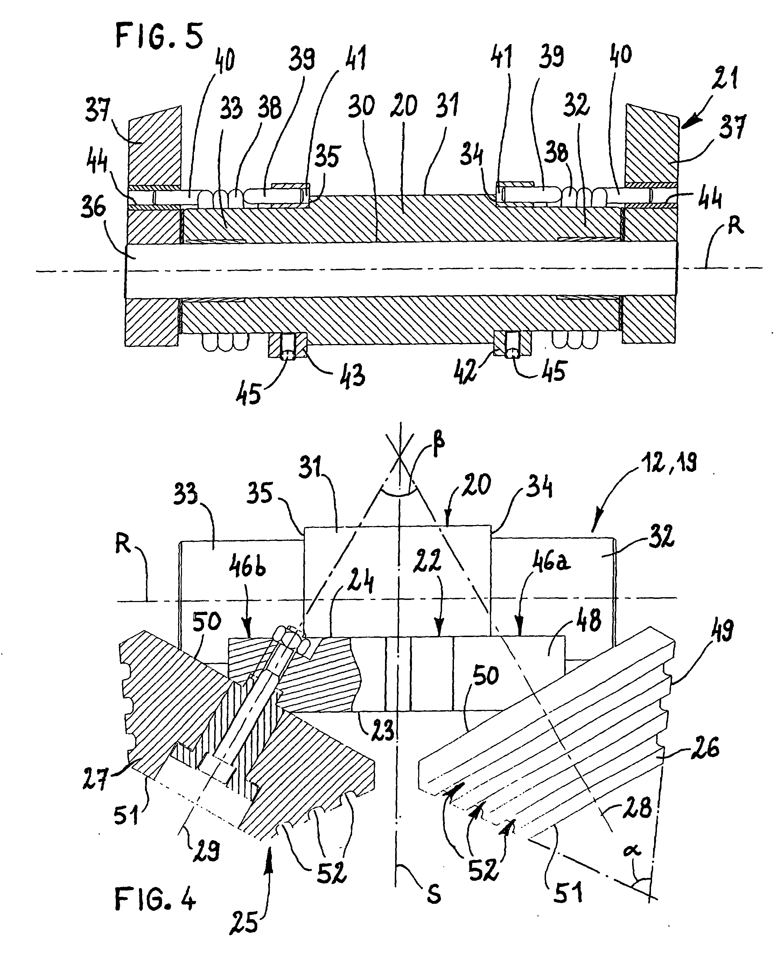

Selon un mode de réalisation illustré sur la figure 5, la bague 42, 43 est maintenue fixe en rotation sur le moyeu 20 au moyen d'une vis sans tête 45 qui traverse radialement la bague 42, 43 et appuie sur la surface extérieure du moyeu 20, ce qui permet un réglage de la position angulaire du palonnier 19 par rapport au bras mobile 11.

On décrit à présent le châssis 22. Par chassis on entend tout type de structure de support des galets 26, 27.

Selon un mode de réalisation, le châssis 22 comprend par ailleurs une paire 46 de branches 46a, 46b étendues de part et d'autre du plan S de symétrie.

Selon un mode de réalisation illustré sur la figure 5 notamment, le châssis 22 est pourvu de deux paires de branches : une paire supérieure 46 de branches 46a, 46b, et une paire inférieure 47 de branches 47a, 47b, qui forment ensemble une croix s'étendant de part et d'autre du moyeu 20 et de part et d'autre du plan S de symétrie.

Les paires 46, 47 de branches 46a, 46b, 47a, 47b portent alors chacune une paire 25 de galets 26, 27 disposés sensiblement symétriquement par rapport au plan de symétrie S.

Chaque branche 46a, 46b, 47a, 47b présente une partie extrême libre 48 sur laquelle est monté un galet 26, 27, qui peut pivoter par rapport à la branche autour de son axe de rotation 28, 29.

Selon une variante, le châssis 22 se présente sous la forme d'une rampe étendue sensiblement selon le plan de coupe P. Cette rampe est par exemple pourvue d'une pluralité de paires de branches portant chacune un galet. Cette rampe peut être articulée pour pouvoir s'adapter au contour de la colonne vertébrale 4 de la carcasse 2.

Par ailleurs, chaque galet 26, 27 présente une surface extérieure 49 destinée à être appuyée sur la face dorsale externe 10 de la carcasse 2 lorsque le dispositif 12 est appliqué contre cette face dorsale 10.

Cette surface 49 présente une symétrie de révolution autour de l'axe de rotation 28, 29 du galet 26, 27.

Selon un mode de réalisation illustré sur les figures, cette surface 49 est tronconique. Le galet 26, 27 présente une surface de base 50 et une surface de sommet 51 circulaires, le diamètre de la surface de base 50 étant supérieur au diamètre de la surface de sommet 51.

Selon un mode de réalisation, le galet 26, 27 est fixé à la branche 46a, 46b, 47a, 47b de manière que sa surface de base 50 soit tournée vers le châssis 22, la surface de sommet 51 étant localisée à distance du châssis 22.

Chaque galet 26, 27 présente une conicité dont l'ouverture angulaire, notée α, est choisie en fonction de la conformation de la face dorsale 10 des carcasses 2 à découper.

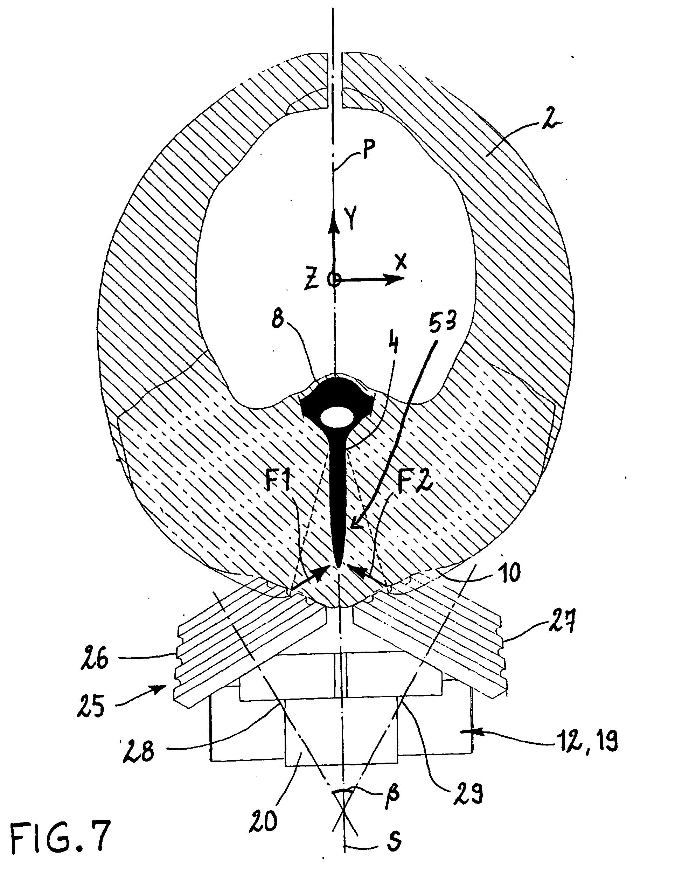

L'ouverture angulaire α est par exemple comprise entre 5° et 120°. Selon un mode de réalisation illustré sur les figures 4 et 7, cette ouverture angulaire α est de 70° environ.

Les galets 26, 27 sont par exemple interchangeables afin de permettre une adéquation du dispositif de guidage 12 avec la conformation des différents types de carcasses 2 à découper, ou afin de changer tout galet présentant une usure prononcée nuisant au maintien ferme de la carcasse 2.

A cet effet, la fixation des galets 26, 27 au châssis 22 peut être réalisée au moyen de vis et de manchons cylindriques (figure 4).

En outre, les axes de rotation 28, 29 respectifs des galets 26, 27 d'une même paire 25 forment ensemble un « V » dont l'ouverture est orientée dans la même direction que la face interne 23 du châssis 22.

Cette caractéristique distingue le dispositif de guidage 12 des dispositifs classiques, dont les galets, généralement de forme tronconique pour s'adapter à la forme bombée de la face dorsale externe de la carcasse, tournent autour d'axes perpendiculaires au plan de coupe.

De la sorte, le mouvement circulaire d'un point situé à la surface du galet en contact avec la carcasse s'effectue dans un plan parallèle au plan de coupe, la force d'appui exercée par le galet étant également parallèle au plan de coupe, ce qui présente l'inconvénient de ne pas assurer un maintien ferme de la carcasse.

Par contre, grâce à l'inclinaison des galets 26, 27, un point situé sur la surface extérieure 49 décrit, lors de la rotation du galet 26, 27, un mouvement circulaire dans un plan dit de guidage G sensiblement perpendiculaire à l'axe 28, 29 du galet, de sorte que les forces d'appui - illustrées sur la figure 7 par les flèches F1, F2 - exercées par les galets 26, 27 d'une même paire 25 sur la face dorsale externe 10 de la carcasse 2 sont convergentes et dirigées vers le plan de coupe P.

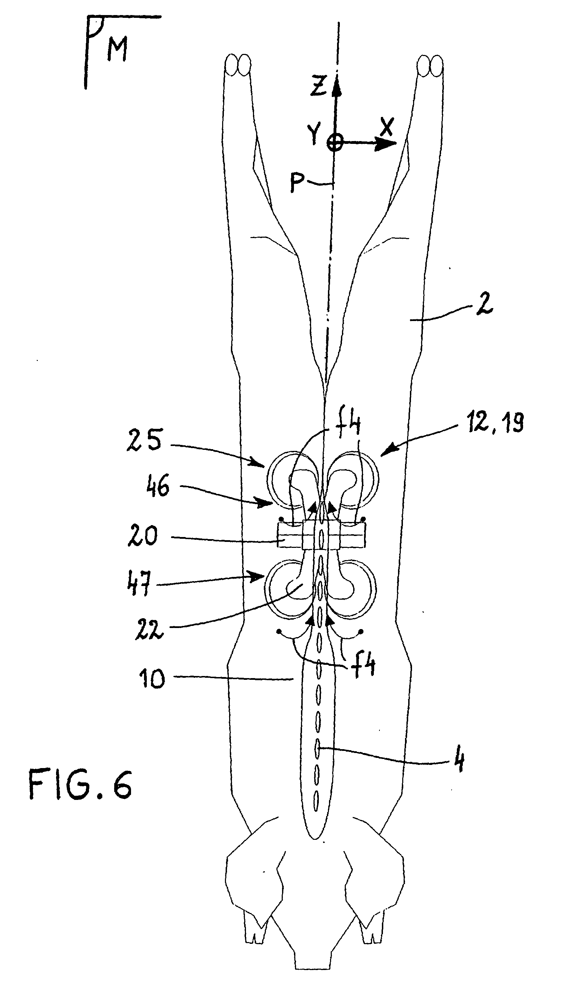

La combinaison des forces d'appui F1 et F2 provoque, lorsque les galets 26, 27 roulent sur la face dorsale externe 10 dans un sens indiqué par les flèches f4 indiquées sur la figure 6, un pincement de la face dorsale externe 10 qui permet un maintien ferme de la carcasse 2 et évite son pivotement autour de la colonne vertébrale 4 lors de sa découpe. L'effet technique serait au moins en partie dû aux effets de vitesses de rotation variant sur les galets tronconiques.

L'angle, noté β, formé par les axes de rotation 28, 29 des galets 26, 27 d'une même paire 25 est par exemple compris entre 40° et 120°.

Selon un mode de réalisation illustré sur les figures 2, 4 et 7, l'angle β est sensiblement égal à 60°.

En outre, chaque galet 26, 27 peut comprendre au moins une gorge 52 ménagée dans sa surface extérieure 49.

Cette gorge 52 présente par exemple une symétrie de révolution autour de l'axe de rotation 28, 29 du galet 26, 27.

Cette gorge peut être de section rectangulaire, carrée, pseudo-rectangulaire, pseudo-carrée, ou encore semi-circulaire dans un plan contenant l'axe 28, 29 du galet 26, 27.

Selon un mode de réalisation illustré sur les figures, chaque galet 26, 27 comprend une pluralité de gorges 52 coaxiales, telles que celle qui vient d'être décrite, espacées les unes des autres, ménagées dans la surface extérieure 50 du galet 26, 27.

Ces gorges 52 confèrent aux galets 26, 27 des propriétés anti-dérapantes permettant d'améliorer le maintien de la carcasse 2 par le dispositif de guidage 12.

Ces gorges 52 permettent notamment l'évacuation, lors du roulement des galets 26, 27 sur la face dorsale externe 10 de la carcasse 2, des liquides présents sur celle-ci, à la manière du relief d'un pneu de véhicule évacuant l'eau présente sur la chaussée.

En ce qui concerne les matériaux utilisés, le châssis 22 peut être réalisé au moins partiellement en métal, par exemple en acier, tandis que les galets 26, 27 peuvent être réalisés dans un matériau polymère synthétique tel qu'une fibre polyamide aisée à mouler et/ou à usiner.

Le dispositif de guidage 12 peut également comprendre des moyens de réglage de l'angle entre les axes de rotation 28, 29 des galets 26, 27 d'une même paire 25 pour s'adapter à la conformation de la face dorsale externe 10 de la carcasse 2.

Grâce à l'inclinaison des galets décrite, le palonnier est efficace même lorsqu'une opération de prédécoupe est effectuée sur la face dorsale. En particulier le palonnier permet un recentrage des chairs et des apophyses qui précède la découpe par la lame de scie. Il est ainsi efficace même si l'on a retiré avant la découpe de la carcasse en demi carcasses une zone 53 (figure 7), pour la fabrication par exemple de bacon canadien ou de lonzo italien.

Par ailleurs on comprend que l'utilisation d'axes inclinés peut s'appliquer à des châssis de dispositif de guidage externe très variés, mobiles embarqués sur la tête de coupe ou sur une colonne indépendante ,ou sur points fixes.

## Revendications

1. Dispositif de guidage apte à appuyer sur la face dorsale externe (10) d'une carcasse (2) d'un animal, lors de la découpe de celle-ci, le dit dispositif (12) comprenant :
- un châssis (22) qui comprend une face interne (23) destinée à être orientée vers la face dorsale externe (10) de la carcasse (2), ainsi qu'une face externe (24) opposée à la dite face interne (23) ; et
- au moins une paire (25) de galets (26, 27) fous montés sur le châssis (22) autour d'axes de rotation (28, 29), chaque galet (26, 27) présentant une surface extérieure (49) apte à être appuyée sur la face dorsale externe (10) de la carcasse (2), les axes de rotation (28, 29) des galets (26, 27) d'une même paire (25) formant ensemble un « V » dont l'ouverture est orientée dans la même direction que la face interne (23) du châssis (22),
le dit dispositif (12) étant **caractérisé en ce qu'**il se présente sous la forme d'un palonnier (19), comprenant un moyeu (20) fixé à demeure sur la face externe (24) du châssis (22), le châssis (22) comprenant au moins une paire (46) de branches (46a, 46b), sur chacune desquelles est monté pivotant un galet (26, 27).

2. Dispositif de guidage selon la revendication 1, **caractérisé en ce que** chaque galet (26, 27) a la forme d'un tronc de cône de révolution dont l'axe est sensiblement confondu avec l'axe de rotation (28, 29) du galet (26, 27), et dont la base (50) est tournée vers le châssis (22).

3. Dispositif de guidage selon la revendication 1 ou la revendication 2, **caractérisé en ce que** chaque galet (26, 27) comprend au moins une gorge (52) ménagée dans la surface extérieure (49) du galet (26, 27), cette gorge (52) présentant une symétrie de révolution autour de l'axe de rotation (28, 29) du galet (26, 27).

4. Dispositif de guidage selon l'une des revendications 1 à 3, **caractérisé en ce que** chaque galet (26, 27) comprend une pluralité de gorges (52) coaxiales espacées les unes des autres, ménagées dans la surface extérieure (49) du galet (26, 27), présentant chacune une symétrie de révolution autour de l'axe de rotation (28, 29) du galet (26, 27).

5. Dispositif de guidage selon l'une des revendications 1 à 4, **caractérisé en ce que** l'angle (β) formé par les axes de rotation (28, 29) des galets (26, 27) d'une même paire (25) est compris entre 60° et 140°.

6. Dispositif de guidage selon l'une des revendications 1 à 5, **caractérisé en ce que** les dits galets (26, 27) sont réalisés dans un matériau polymère synthétique.

7. Dispositif selon l'une des revendications 1 à 7, **caractérisé en ce que** le châssis (22) comprend deux paires (46, 47) de branches (46a, 46b ; 47a, 47b) disposées en croix, un galet (26, 27) étant monté pivotant sur chaque branche (46a, 46b ; 47a, 47b).

8. Installation pour la découpe de carcasses (2) suspendues d'animaux de boucherie, comprenant :
- un organe de coupe (6) apte à se déplacer suivant un plan (P) dit de coupe, pour découper une carcasse (2) au moins en partie ;
- un organe de guidage interne (9) situé sous l'organe de coupe (6), apte à être appliqué contre une face dorsale interne (8) de la carcasse (2) ; et
- un organe de guidage externe (9) apte à être appliqué, à l'encontre de l'organe de guidage interne (9), contre une face dorsale externe (10) de la carcasse (2),
**caractérisée en ce que** l'organe de guidage externe (9) comprend un dispositif de guidage (12) selon l'une des revendications 1 à 7.

9. Installation selon la revendication 8, **caractérisée en ce que** le dit dispositif de guidage externe (12) est monté pivotant sur un bras mobile (11) porté par une poutre (14) qui porte également l'organe de coupe (6).

10. Installation selon a revendication 8, **caractérisée en ce que** le dit dispositif de guidage externe (12) est monté pivotant sur un bras mobile (11) indépendant de l'organe de coupe (6).

11. Installation selon la revendication 9 ou la revendication 10, **caractérisée en ce que** le dit dispositif de guidage externe (12) forme un palonnier (19) monté pivotant sur le bras mobile (11) au moyen d'un moyeu (20), le dit dispositif (12) étant apte à pivoter par rapport à l'axe du moyeu (20).

12. Installation selon l'une des revendications 8 à 10, **caractérisée en ce que** le dit dispositif de guidage externe (12) comprend un organe de rappel élastique (38) apte à asservir la position angulaire du dispositif de guidage (12) externe (12) par rapport au bras mobile (11).

13. Procédé de découpe de carcasses (2) d'animaux de boucherie, qui comprend les étapes prévoyant :
- d'introduire un organe de coupe (6) par le côté ventral ouvert de la carcasse (2) ;
- d'appliquer contre une face dorsale interne (8) de la carcasse (2) un organe de guidage interne (9) ;
- d'appliquer contre une face dorsale externe (10) de la carcasse (2) un organe de guidage externe (9) à l'encontre de l'organe de guidage interne (8) ;
- de mettre en fonction l'organe de coupe (6) ;
- de déplacer l'ensemble selon un plan de coupe (P) ;
le dit procédé étant **caractérisé en ce qu'**il comprend en outre une étape prévoyant de pincer la face dorsale externe (10) de la carcasse (2) pour assurer son maintien lors de sa découpe, en appliquant contre la face dorsale externe (10) de la carcasse (2) un dispositif de guidage (12) selon l'une des revendications 1 à 7, et en déplaçant celui-ci selon le dit plan de coupe (P).

## Claims

1. A guidance device able to bear on the external dorsal face (10) of the carcass (2) of an animal, when this is being cut, the said device (12) comprising:
- a frame (22) which comprises an internal face (23) intended to be oriented towards the external dorsal face (10) of the carcass (2), and an external face (24) opposite to the said internal face (23); and
- at least one pair (25) of loose rollers (26, 27) mounted on the frame (22) about axes of rotation (28, 29), each roller (26, 27) having an external surface (49) able to be pressed against the external dorsal face (10) of the carcass (2), the axes of rotation (28, 29) of the rollers (26, 27) in one and the same pair (25) forming together a V whose opening is oriented in the same direction as the internal face (23) of the chassis (22),
the said device (12) being **characterised in that** it is in the form of a bar (19), comprising a hub (20) permanently fixed to the external face (24) of the frame (22), the frame (22) comprising at least one pair (46) of arms (46a, 46b), on each of which a roller (26, 27) is pivotally mounted.

2. A guidance device according to Claim 1, **characterised in that** each roller (26, 27) is in the shape of a truncated cone of revolution whose axis is substantially merged with the axis of rotation (28, 29) of the roller (26, 27) and whose base (50) is turned towards the frame (22).

3. A guidance device according to Claim 1 or Claim 2, **characterised in that** each roller (26, 27) comprises at least one groove (52) provided in the external surface (49) of the roller (26, 27), this groove (62) having symmetry of revolution about the axis of rotation (28, 29) of the roller (26, 27).

4. A guidance device according to one of Claims 1 to 3, **characterised in that** each roller (26, 27) comprises a plurality of coaxial grooves (52) spaced apart from one another, provided in the external surface (49) of the roller (26, 27), each having symmetry of revolution about the axis of rotation (28, 29) of the roller (26, 27).

5. A guidance device according to one of Claims 1 to 4, **characterised in that** the angle (β) formed by the axes of rotation (28, 29) of the rollers (26, 27) in one and the same pair (25) is between 60° and 140°.

6. A guidance device according to one of Claims 1 to 5, **characterised in that** the said rollers (26, 27) are produced from a synthetic polymer material.

7. A device according to one of Claims 1 to 6, **characterised in that** the frame (22) comprises two pairs (46, 47) of arms (46a, 46b; 47a, 47b) disposed in a cross, a roller (26, 27) being pivotally mounted on each arm (46a, 46b; 47a, 47b).

8. An installation for cutting suspended carcasses (2) of butchery animals, comprising:
- a cutting member (6) able to move in a so-called cutting plane (P) in order to at least partly cut a carcass (2);
- an internal guidance member (9) situated under the cutting member (6), able to be applied against an internal dorsal face (8) of the carcass (2); and
- an external guidance member (9) able to be applied, counter to the internal guidance member (9), against an external dorsal face (10) of the carcass (2),
**characterised in that** the external guidance member (9) comprises a guidance device (12) according to one of Claims 1 to 7.

9. An installation according to Claim 8, **characterised in that** the said external guidance device (12) is pivotally mounted on a movable arm (11) carried by a beam (14) which also carries the cutting member (6).

10. An installation according to Claim 8, **characterised in that** the said external guidance device (12) is pivotally mounted on a movable arm (11) independent of the cutting member (6).

11. An installation according to Claim 9 or Claim 10, **characterised in that** the said external guidance device (12) forms a bar (19) pivotally mounted on the movable arm (11) by means of a hub (20), the said device (12) being able to pivot with respect to the axis of the hub (20).

12. An installation according to one of Claims 8 to 10, **characterised in that** the said external guidance device (12) comprises an elastic return member (38) able to slave the angular position of the external guidance device (12) with respect to the movable arm (11).

13. A method of cutting butchery animal carcasses (2) which comprises the steps making provision for:
- introducing a cutting member (6) through the open ventral side of the carcass (2);
- applying an internal guidance member (9) against an internal dorsal face (8) of the carcass (2);
- applying an external guidance member (9) against an external dorsal face (10) of the carcass (2) counter to the internal guidance member (8) ;
- starting up the cutting member (6) ;
- moving the assembly along a cutting plane (P) ;
the said method being **characterised in that** it also comprises a step making provision for gripping the external dorsal face (10) of the carcass (2) in order to ensure that it is held whilst it is being cut, by applying against the external dorsal face (10) of the carcass (2) a guidance device (12) according to one of Claims 1 to 7 and moving it along the said cutting plane (P).

## Patentansprüche

1. Führungsvorrichtung, das gegen die äußere Rückseite (10) eines Tiergerippes (2) bei dessen Zerschneiden angelegt werden kann, wobei die besagte Vorrichtung (12) umfasst:
- ein Gestell (22), das eine Innenseite (2) umfasst, die zur äußeren Rückseite (10) des Gerippes (2) hin gerichtet werden soll, sowie eine Außenseite (24), die der besagten Innenseite (23) gegenüberliegt; und
- mindestens ein Paar (25) Schlepprollen (26, 27), die um Rotationsachsen (28, 29) herum auf das Gestell (22) montiert sind, wobei jede Rolle (26, 27) eine Außenfläche (49) aufweist, die gegen die äußere Rückseite (10) des Gerippes (2) angelegt werden kann, wobei die Rotationsachsen (28, 29) der Rollen (26, 27) eines gleichen Paares (25) gemeinsam ein "V" bilden, dessen Öffnung in die gleiche Richtung gerichtet ist wie die Innenseite (23) des Gestells (22),
wobei die besagte Vorrichtung (12) **dadurch gekennzeichnet ist, dass** sie in Form eines Steuerhebels (19) ausgebildet ist, mit einer an der Außenseite (24) des Gestells (22) befestigten Nabe (20), wobei das Gestell (22) mindestens ein Paar (46) Schenkel (46a, 46b) aufweist, auf denen jeweils eine Rolle (26, 27) drehbar montiert ist.

2. Führungsvorrichtung nach Anspruch 1, **dadurch gekennzeichnet, dass** jede Rolle (26, 27) die Form eines Rotationskegelstumpfes aufweist, dessen Achse etwa mit der Rotationsachse (28, 29) der Rolle (26, 27) übereinstimmt, und dessen Basis (50) zum Gestell (22) hin gerichtet ist.

3. Führungsvorrichtung nach Anspruch 1 oder Anspruch 2, **dadurch gekennzeichnet, dass** jede Rolle (26, 27) mindestens einen in der Außenfläche (49) der Rolle (26, 27) vorgesehenen Hals (52) umfasst, wobei dieser Hals (52) eine Rotationssymmetrie um die Rotationsachse (28, 29) der Rolle (26, 27) herum aufweist.

4. Führungsvorrichtung nach einem der Ansprüche 1 bis 3, **dadurch gekennzeichnet, dass** jede Rolle (26, 27) eine Mehrzahl von koaxialen, im Abstand zueinander angeordneten Hälsen (52) umfasst, die in der Außenfläche (49) der Rolle (26, 27) vorgesehen sind und jeweils eine Rotationssymmetrie um die Rotationsachse (28, 29) der Rolle (26, 27) herum aufweisen.

5. Führungsvorrichtung nach einem der Ansprüche 1 bis 4, **dadurch gekennzeichnet, dass** der von den Rotationsachsen (28, 29) der Rollen (26, 27) eines gleichen Paares (25) gebildete Winkel (β) zwischen 60° und 140° beträgt.

6. Führungsvorrichtung nach einem der Ansprüche 1 bis 5, **dadurch gekennzeichnet, dass** die besagten Rollen (26, 27) aus einem synthetischen Polymermaterial hergestellt sind.

7. Vorrichtung nach einem der Ansprüche 1 bis 6, **dadurch gekennzeichnet, dass** das Gestell (22) zwei überkreuz angeordnete Paare (46, 47) Schenkel (46a, 46b; 47a, 47b) umfasst, wobei eine Rolle (26, 27) schwenkbar auf jedem Schenkel (46a, 46b; 47a, 47b) montiert ist.

8. Zerschneidungsanlage von hängenden Gerippen (2) von Schlachttieren, mit:
- einem Schneidorgan (6), das sich nach einer so genannten Schneidebene (P) verschieben kann, um ein Gerippe (2) zumindest teilweise zu zerschneiden;
- einem unter dem Schneidorgan (6) angeordneten internen Führungsorgan (9), das gegen eine innere Rückseite (8) des Gerippes angelegt werden kann; und
- einem externen Führungsorgan (9), das gegen das interne Führungsorgan (9) gegen eine äußere Rückseite (10) des Gerippes (2) angelegt werden kann,
**dadurch gekennzeichnet, dass** des äußere Führungsorgan (9) eine Führungsvorrichtung (12) nach einem der Ansprüche 1 bis 7 umfasst.

9. Anlage nach Anspruch 8, **dadurch gekennzeichnet, dass** die besagte äußere Führungsvorrichtung (12) drehbar an einem mobilen Arm (11) montiert ist, der von einem Balken (14) getragen wird, der ebenfalls das Schneidorgan (6) trägt.

10. Anlage nach Anspruch 8, **dadurch gekennzeichnet, dass** die besagte äußere Führungsvorrichtung (12) drehbar an einem mobilen Arm (11) montiert ist, der unabhängig vom Schneidorgan (6) ist.

11. Anlage nach Anspruch 9 oder Anspruch 10, **dadurch gekennzeichnet, dass** die besagte äußere Führungsvorrichtung (12) einen Steuerhebel (19) bildet, der schwenkbar über eine Nabe (20) am mobilen Arm (11) montiert ist, wobei die besagte Vorrichtung (12) in Bezug auf die Achse der Nabe (20) schwenkbar ist.

12. Anlage nach einem der Ansprüche 8 bis 10, **dadurch gekennzeichnet, dass** die besagte äußere Führungsvorrichtung (12) ein federndes Rückstellorgan (38) umfasst, das die Winkelposition der äußeren Führungsvorrichtung (12) in Bezug auf den mobilen Arm (11) steuern kann.

13. Zerschneidungsverfahren von Gerippen (2) von Schlachttieren, das die folgenden Etappen umfasst:
- Einführen eines Schneidorgans (6) über die offene Bauchseite des Gerippes (2);
- Anlegen eines inneren Führungsorgans (9) gegen eine innere Rückseite (8) des Gerippes (2);
- Anlegen eines äußeren Führungsorgans (9) gegen eine äußere Rückseite (10) des Gerippes (2), gegen das innere Pührungsorgan (8) ;
- Einschalten des Schneidorgans (6) ;
- Versetzen der Baugruppe nach einer Schnittebene (P) ;
wobei das besagte Verfahren **dadurch gekennzeichnet ist, dass** es ferner eine Etappe zum Einklemmen der äußeren Rückseite (10) des Gerippes (2) umfasst, um sein Festhalten bei seinem Zerschneiden zu gewährleisten, wobei gegen die äußere Rückseite (10) des Gerippes (2) eine Führungsvorrichtung (12) nach einem der Ansprüche 1 bis 7 angelegt und diese nach der besagten Schneidebene (P) versetzt wird.
